Europäisches Patentamt

(19) European Patent Office

Office européen des brevets

(11) Numéro de publication : **0 146 182**
**B1**

(12) **FASCICULE DE BREVET EUROPÉEN**

(45) Date de publication du fascicule du brevet :
09.08.89

(51) Int. Cl.⁴ : **G 01 S   7/52**, G 01 S 15/02,
**G 01 S 15/89**

(21) Numéro de dépôt : **84201806.1**

(22) Date de dépôt : **05.12.84**

(54) Appareil d'examen de milieux par échographie ultrasonore.

(30) Priorité : **14.12.83 FR 8320042**

(43) Date de publication de la demande :
**26.06.85 Bulletin 85/26**

(45) Mention de la délivrance du brevet :
**09.08.89 Bulletin 89/32**

(84) Etats contractants désignés :
**BE DE FR GB SE**

(56) Documents cités :
EP–A– 0 100 234
EP–A– 0 106 409
EP–A– 0 107 172
GB–A– 2 023 830
US–A– 4 197 750
US–A– 4 202 215
US–A– 4 409 838
IEEE TRANSACTIONS ON SONICS AND ULTRASO-
NICS, vol. SU-30, no. 1, janvier 1983, pages 26-36,
New York, US; M. O'DONNELL "Quantitative volume
backscatter imaging"
IBM JOURNAL OF RESEARCH AND DEVELOPMENT,
volume 25, no. 1, janvier 1981, pages 71-82, New York,
US; K.M. PAN et al. "Tomographic reconstruction of
ultrasonic attenuation with correction for refractive
errors"

(73) Titulaire : **Laboratoires d'Electronique et de Physique**
**Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**BE DE GB SE**

(72) Inventeur : **Cardoso, Jean-François Société Civile**
**S.P.I.D.**
**209 rue de l'Université**
**F-75007 Paris (FR)**
Inventeur : **Fink, Mathias Alexandre Société Civile**
**S.P.I.D.**
**209 rue de l'Université**
**F-75007 Paris (FR)**

(74) Mandataire : **Landousy, Christian et al**
**Société Civile S.P.I.D. 209, Rue de l'Université**
**F-75007 Paris (FR)**

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

Description

La présente invention concerne un appareil d'examen de milieux par échographie ultrasonore, et trouve une application essentielle dans l'exploration de tissus biologiques.

Dans un tel appareil, des signaux ultrasonores sont émis en direction de la région à explorer et sont alors réfléchis soit principalement par les multiples centres diffuseurs dont ladite région est constituée soit également par les surfaces de transition entre milieux successifs d'impédances acoustiques différentes. Les échos ainsi formés sont reconvertis en signaux électriques dans un étage de réception qui assure un traitement approprié de ces signaux, en particulier une correction de l'atténuation des ondes ultrasonores en fonction de la distance qu'elles ont parcouru dans les milieux explorés.

Un appareil d'exploration de ce type est décrit dans le brevet des Etats-Unis d'Amérique n° 4 057 049 délivré le 8 novembre 1977 au nom de la société cessionnaire National Research Development Corporation, London, England. Comme indiqué en colonne 2, lignes 8 et suivantes de ce document, des signaux électriques sont émis par un générateur 1 vers un transducteur 2 qui les convertit en ondes ultrasonores de spectre déterminé se propageant dans la région à explorer. A la réception, les échos correspondant aux obstacles constitués par les centres diffuseurs rencontrés ou les surfaces de transition entre milieux distincts sont à nouveau convertis par le transducteur en signaux électriques qui sont fournis à un amplificateur 4, puis à un dispositif de visualisation 7 après correction de l'atténuation ultrasonore en fonction du temps.

On sait actuellement que cette atténuation ultrasonore est d'autant plus importante que la fréquence des signaux est plus élevée. Il est donc prévu, selon le brevet cité, de prélever dans le spectre du signal reçu deux bandes de fréquence relativement étroites et d'utiliser l'information locale recueillie dans ces bandes pour modifier la courbe de gain de l'amplificateur.

Le but de l'invention est de proposer un appareil entrant dans la même catégorie que celui décrit précédemment, c'est-à-dire dont le fonctionnement repose sur l'établissement d'une corrélation entre la fréquence du signal de réception et son amplitude, mais en utilisant ce principe d'une manière nouvelle.

L'invention concerne à cet effet un appareil d'exploration de milieux par échographie ultrasonore selon la définition de la revendication 1.

La structure ainsi définie permet en effet, dans les différents modes de réalisation envisagés plus loin, d'obtenir, grâce à l'établissement d'une corrélation originale fréquence-énergie, une réduction de la variance affectant la fréquence des signaux de réception des échographes ultrasonores.

Les particularités de l'invention apparaîtront maintenant de façon plus précise dans la description qui suit et dans les dessins annexés, donnés à titre d'exemples non limitatifs et dans lesquels :

les figures 1a à 1c fournissent une représentation de l'évolution temporelle du signal échographique reçu, de sa fréquence instantanée, et de son énergie instantanée ;

la figure 2 représente un mode de réalisation de l'appareil selon l'invention ;

les figures 3 et 4 montrent deux variantes de l'étage de démodulation et de filtrage de la figure 2.

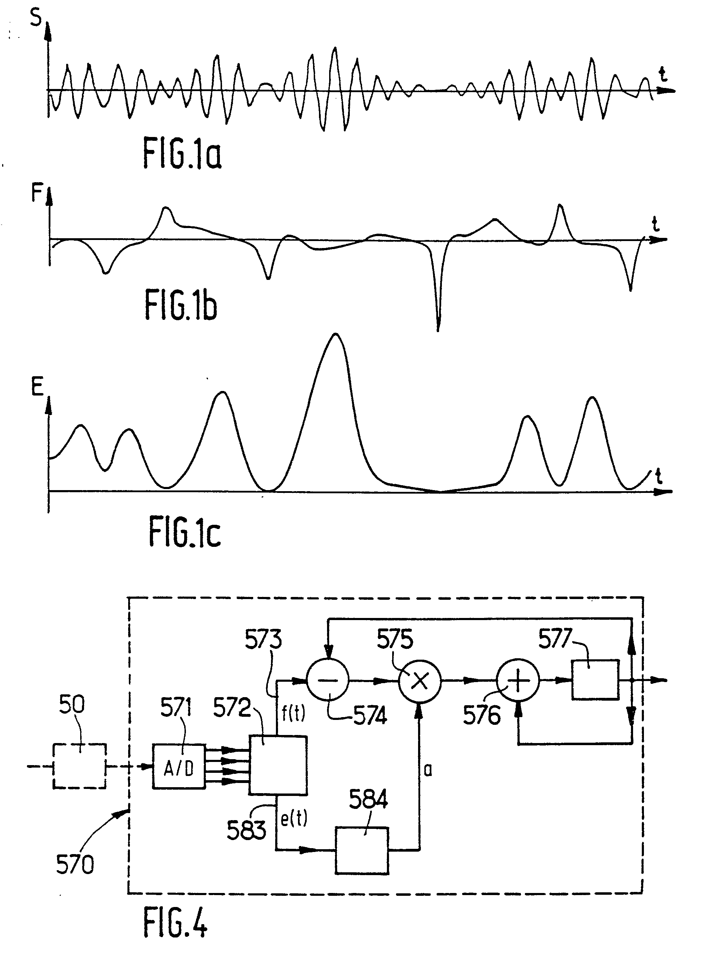

Avant de décrire plus précisément cette invention, on rappellera qu'en échographie ultrasonore des milieux diffusants, le signal échographique reçu (figure 1a) résulte de l'interférence d'une multitude d'échos renvoyés par les obstacles rencontrés, ou centres diffuseurs. La nature interférentielle de ce signal échographique reçu est la cause de variations locales de la fréquence instantanée (figure 1b) de ce signal. On peut alors observer, sur la figure 1c, l'existence de creux de modulation dont la position temporelle est liée à ces variations locales de la fréquence instantanée, et l'invention va exploiter la corrélation entre ces creux d'énergie et ces variations de fréquence, afin de disposer d'une estimation plus sûre de cette fréquence.

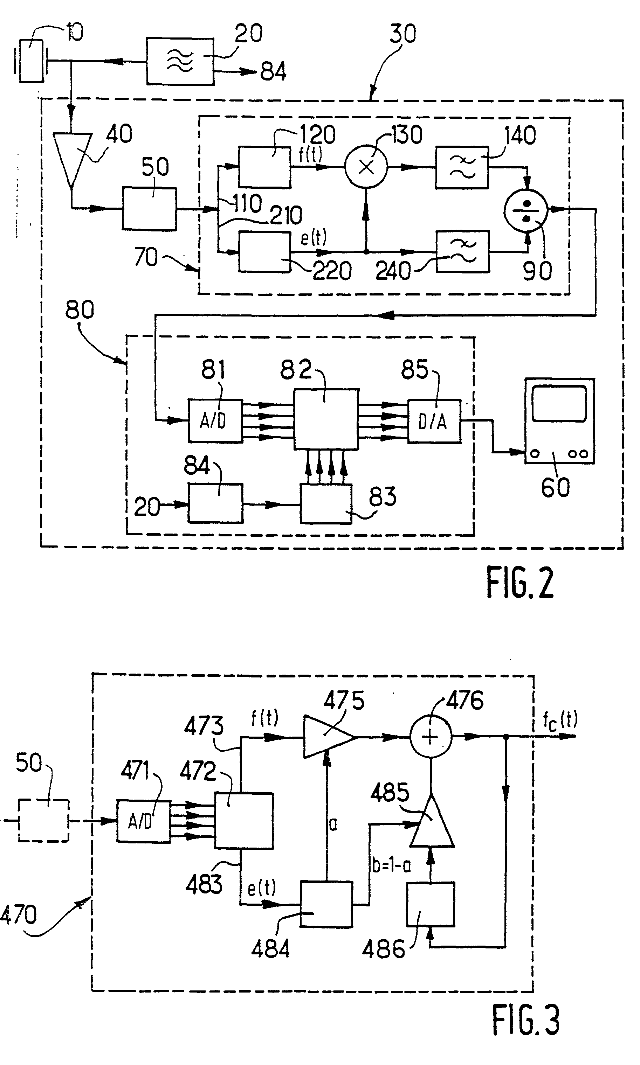

L'appareil proposé comprend donc, dans l'exemple décrit sur la figure 2, une sonde unique constituant le support d'un transducteur ultrasonore 10 et permettant d'obtenir des échographies de type A. Cependant il est manifeste que l'invention est également applicable si l'on explore non plus une ligne mais toute une section plane d'un milieu, soit à l'aide d'une sonde à déplacement manuel ou à déplacement mécanique angulaire dit sectoriel, associée à un écran de visualisation du type radar, soit à l'aide d'une barrette linéaire de transducteurs ultrasonores définissant un certain nombre de directions d'exploration et associée à un circuit de commutation de l'étage de réception et de traitement des échos successivement sur chaque transducteur ou groupe de transducteurs déterminé, soit encore à l'aide d'une barrette de transducteurs dite à balayage électronique sectoriel, également associée à un circuit de commutation ainsi qu'à un réseau de lignes à retard ou de déphaseurs.

Le transducteur 10 est associé d'une part à un étage d'émission 20 destiné à permettre l'émission répétée d'ondes acoustiques par le transducteur dans une direction quelconque à travers le milieu à examiner et d'autre part à un étage de réception et de traitement 30. Cet étage 30 est destiné à permettre la réception et le traitement des échos ultrasonores reçus par le transducteur 10 et correspondant aux obstacles rencontrés dans leur direction de propagation par les ondes acoustiques. Lesdits obstacles peuvent être soit des surfaces de séparation entre milieux successifs d'impédances acoustiques différentes, soit les nombreux centres diffuseurs que le milieu exploré peut contenir. On ne s'intéressera pas ici aux échos de grande amplitude qui matérialisent les frontières entre milieux mais seulement à l'action des centres diffuseurs, en limitant l'exploration utile à une zone comprise entre deux de ces frontières.

L'étage de réception et de traitement 30 comprend, de façon tout à fait classique, un amplificateur à gain variable 40, un circuit de compensation de gain 50 assurant la commande du gain de cet amplificateur, et, dans le cas présent, un dispositif de visualisation 60 qui assure la visualisation des signaux traversant l'étage 30 sous la forme d'une échographie de type A, sur un axe correspondant à la direction principale de propagation du transducteur 10. L'étage 30 comprend également, entre les circuits 50 et 60, un étage 70 de démodulation et de filtrage du signal échographique, puis un étage de correction de la diffraction.

L'étage 70 de démodulation et de filtrage comprend lui-même deux voies en parallèle 110 et 210 : la première de ces voies comprend en série un circuit 120 de détermination de la fréquence instantanée du signal échographique (un tel circuit figure par exemple au catalogue de la société RCA sous la référence CA 3089 E), un multiplicateur 130 et un premier filtre passe-bas 140 dont la sortie est envoyée sur une première entrée d'un diviseur 90, tandis que la seconde voie comprend en série un circuit 220 de détermination de l'énergie instantanée du signal échographique (un tel circuit figure par exemple au catalogue de la société Motorola sous la référence MC 1496) et un deuxième filtre passe-bas 240 dont la sortie est envoyée sur la deuxième entrée du diviseur 90 (les filtres 140 et 240 sont identiques). La sortie du circuit 220 est également envoyée sur la deuxième entrée du multiplicateur 130 de la première voie (ce circuit 130 peut être par exemple le circuit MC 1494 du catalogue Motorola).

Le fonctionnement de ce premier mode de réalisation de l'invention est le suivant. Comme le signal échographique a subi l'action du circuit de compensation de gain, son énergie moyenne est constante dans le temps, mais son énergie instantanée présente cependant, par rapport à cette valeur moyenne, des écarts locaux dont une étude plus approfondie a révélé qu'ils étaient en corrélation avec les écarts locaux de la fréquence instantanée (ils indiquent des valeurs aberrantes, comme on l'a précisé plus haut en liaison avec les figures 1a à 1c) : à faible énergie, la variance sur la valeur de la fréquence instantanée est grande, alors qu'à forte énergie, cette valeur est plus proche de sa valeur espérée. De cette constatation résulte la décision, conformément à une caractéristique importante de l'invention et comme indiqué sur la figure 2, de pondérer le signal f(t) traversant la première voie 110 par le signal e(t) traversant la deuxième voie 210 (ce qui revient à favoriser les fréquences auxquelles correspond une énergie importante), par l'intermédiaire de la liaison établie entre la sortie du circuit 220 de détermination de l'énergie instantanée et la deuxième entrée du multiplicateur 130. Le signal corrigé de sortie du diviseur 90 est alors envoyé vers l'étage 80 de correction de diffraction prévu en sortie de l'étage 70.

Cet étage de correction de diffraction comprend ici un convertisseur analogique-numérique 81 à m sorties numériques envoyées vers une mémoire numérique 82, par exemple une mémoire morte programmable (en anglais, « programmable read-only memory », ou mémoire PROM). Cette mémoire reçoit par ailleurs les n sorties numériques d'un compteur 83 commandé par un circuit d'horloge 84, lui-même déclenché par l'horloge de l'étage d'émission 20. L'étage 80 de correction de diffraction est nécessaire dans le cas d'un échographe avec transducteur non focalisant et plus encore dans le cas d'un transducteur focalisant, pour assurer la compensation de l'effet de diffraction qui se produit du fait des dimensions du transducteur, qui ne sont pas infiniment petites, et qui fausse les indications fournies par l'étage 70 de démodulation et de filtrage.

On montre que la correction de cet effet de diffraction n'est liée qu'à la valeur de la fréquence instantanée et à la distance, c'est-à-dire au temps de parcours, et qu'elle est donc possible par exemple en stockant dans la mémoire m x n valeurs de correction obtenues par calibration préalable à partir de m valeurs de fréquence instantanée f(t) et de n valeurs de distance (en supposant la vitesse des ondes ultrasonores constante dans la zone considérée, les signaux délivrés par le compteur 83 sont proportionnels aux distances parcourues par ces ondes). Pour cette phase de calibration, on prend ici en compte les réponses échographiques du transducteur lorsqu'il est placé en face de fantômes de milieux diffusants.

Les réponses ainsi obtenues sont donc utilisées pour introduire dans la mémoire 82 les valeurs de correction de diffraction. Selon les cas, les valeurs ainsi délivrées par la mémoire en réponse à une des m valeurs de fréquence et une des n valeurs de temps de parcours peuvent être par exemple soit un coefficient par lequel il faut multiplier la valeur de fréquence à corriger (un multiplieur doit être prévu en sortie de la mémoire 82), soit un écart dont il faut ajouter la valeur algébrique à la valeur de fréquence à corriger (un sommateur est alors prévu en sortie de la mémoire 82), soit la valeur même de la fréquence corrigée ; ces variantes sont équivalentes, au vu du résultat obtenu, et, bien entendu, non limitatives. Dans tous les cas, la sortie de l'étage 80 de correction de diffraction quelle que soit celle des variantes considérées ci-dessus, s'effectue par l'intermédiaire d'un convertisseur numérique-analogique 85 qui est relié à l'entrée du dispositif de visualisation 60.

Dans une variante de réalisation de l'étage 30, il peut être prévu entre la fréquence et l'énergie instantanée une interaction autre que linéaire, par exemple en insérant juste en sortie du circuit 220 de détermination d'énergie instantanée un circuit non linéaire, tel qu'un circuit à seuil, n'autorisant le passage du signal énergie instantanée que si la valeur de celui-ci atteint un seuil déterminé.

Dans un deuxième mode de réalisation, l'appareil selon l'invention comprend les mêmes éléments que ceux représentés sur la figure 2, à l'exception de l'étage de démodulation et de filtrage du signal échographique, qui porte cette fois la référence 470 par analogie avec la référence 70 de la figure 2, et de l'étage de correction de diffraction, dont la modification est précisée ci-dessous.

Cet étage modifié 470 de démodulation et de filtrage comprend maintenant (voir la figure 3) un convertisseur analogique-numérique 471 dont les sorties sont reliées aux entrées d'un circuit numérique 472 de calcul de la fréquence instantanée et de calcul de l'énergie instantanée aux instants successifs d'échantillonnage. Les valeurs de fréquence et d'énergie ainsi calculées périodiquement sont disponibles en sortie du circuit 472 sur deux voies 473 et 483 en parallèle. La première voie 473 comprend successivement un multiplicateur à commande numérique 475, dont la première entrée est donc reliée à la sortie en fréquence du circuit de calcul 472, et un additionneur 476 dont la sortie est reliée à l'étage de correction de diffraction (semblable à l'étage 80 précédemment décrit, à cette exception près que le convertisseur analogique-numérique d'entrée 81 de cet étage n'est plus nécessaire, l'étage précédent fournissant maintenant déjà des informations sous forme numérique). La deuxième voie 483 comprend un circuit d'évaluation de coefficients qui est une mémoire morte 484 de type PROM délivrant d'une part un coefficient a envoyé sur la deuxième entrée du multiplicateur 475 et d'autre part le coefficient complémentaire b = 1-a envoyé en tant que deuxième entrée vers un multiplicateur à commande numérique 485, la première entrée de ce multiplicateur 485 étant constituée par la sortie de l'additionneur 476 après traversée par celle-ci d'un circuit à retard 486.

Si l'on appelle respectivement $f_c(t_{N-1})$ et $f_c(t_N)$ les valeurs de la fréquence instantanée aux instants d'échantillonnage $t_{N-1}$ et $t_N$ après pondération de celle-ci par l'énergie et $f(t_{N-1})$ et $f(t_N)$ ces valeurs avant pondération, l'expression de $f_c(t_N)$ est, selon le schéma adopté sur la figure 3, donnée par :

$$f_c(t_N) = a\, f(t_N) + b\, f_c(t_{N-1}) \tag{2}$$

Les essais réalisés par la demanderesse ont montré qu'une pondération efficace était obtenue pour un coefficient a égal à $e/e + 1$ (où $e(t)$ représente l'énergie instantanée).

L'expression (2) peut aussi être mise sous la forme équivalente :

$$f_c(t_N) = a\, f(t_N) + (1-a)\, f_c(t_{N-1})$$

ou encore :

$$f_c(t_N) = f_c(t_{N-1}) + a(f(t_N) - f_c(t_{N-1})) \tag{3}$$

A cette expression (3) correspond un troisième mode de réalisation de l'appareil selon l'invention dans lequel seul l'étage de démodulation et de filtrage diffère par rapport aux réalisations déjà décrites. Seul est donc représenté, sur la figure 4, cet étage modifié, référencé 570.

Cet étage 570 de démodulation et de filtrage comprend un convertisseur analogique-numérique 571 dont les sorties sont reliées comme précédemment aux entrées d'un circuit numérique 572 de calcul de la fréquence instantanée et de l'énergie instantanée (aux instants successifs d'échantillonnage). Les valeurs de fréquence et d'énergie calculées dans ce circuit sont disponibles sur deux voies 573 et 583 en parallèle, dont la première comprend successivement un soustracteur 574, un multiplicateur 575, un additionneur 576 et un circuit à retard 577, et dont la seconde contient une mémoire morte 584 de type PROM. Le soustracteur 574 reçoit d'une part la sortie en fréquence du circuit de calcul 572 et d'autre part la sortie, retardée dans le circuit 577, de l'additionneur 576 et délivre le signal $f(t_N) - f_c(t_{N-1})$ qui est envoyé vers la première entrée du multiplicateur 575, dont la deuxième entrée reçoit le coefficient a fourni par la mémoire 584 en fonction de la valeur de l'énergie à l'entrée de cette mémoire. La sortie a $|f(t_N) - f_c(t_{N-1})|$ du multiplicateur 575 est envoyée vers l'additionneur 576, qui reçoit également en entrée sa propre sortie retardée dans le circuit 577 et délivre le signal $f_c(t_N)$ égal à $f_c(t_{N-1}) + a\,[f(t_N) - f_c(t_{N-1})]$. Ce signal $f_c(t_N)$ est retardé dans le circuit 577 et constitue alors d'une part le signal qui est renvoyé vers l'additionneur 576 et vers le soustracteur 574 et d'autre part le signal de sortie de l'étage 570, envoyé vers l'entrée de l'étage 580 de correction de diffraction ; cet étage 580 est identique à l'étage 80, sauf en ce qui concerne le convertisseur analogique-numérique d'entrée 81, absent de l'étage 580 puisque les signaux fournis sont déjà sous forme numérique.

On a bien vu, à la lumière des exemples précédents, que l'invention nécessitait, dans ses grandes lignes, de moduler le filtrage de l'information en fréquence par l'information en énergie. Dans une de ses formes les plus simples, la réalisation de l'invention peut donc aussi être assurée par un circuit RC en série avec la voie fréquence instantanée, la voie énergie instantanée étant reliée à la borne de réglage de la résistance R réglable et la sortie du circuit étant prise aux bornes du condensateur C.

## Revendications

1. Appareil d'exploration de milieux par échographie ultrasonore comprenant au moins un transducteur ultrasonore (10) associé à un étage (20) d'émission de signaux électriques convertis par le transducteur en ondes acoustiques et à un étage (30) de réception et de traitement des échos ultrasonores apparaissant à la suite de la réflexion de ces ondes sur les obstacles rencontrés dans leur direction de propagation, cet étage de réception et de traitement comprenant lui-même essentiellement un amplificateur (40), un circuit (50) de correction de gain en fonction du temps et un circuit (60) d'exploitation des résultats de l'examen échographique, caractérisé en ce que l'étage (30) de réception et de traitement comprend également en sortie de l'ensemble constitué par l'amplificateur (40) et le circuit (50) de correction de gain, des moyens (120, 220 ; 472 ; 572) de détermination de la fréquence instantanée et de l'énergie instantanée du signal échographique fourni par le circuit de correction de gain, des moyens (90, 130, 140, 240 ; 475, 476, 484-486 ; 574-577, 584) de pondération de la valeur de la fréquence instantanée par un coefficient fonction de l'énergie instantanée, et des moyens (80) de correction de diffraction destinés à assurer la compensation de l'effet de diffraction qui se produit du fait des dimensions finies du transducteur (10), la sortie des moyens de correction de diffraction étant reliée audit circuit d'exploitation.

2. Appareil selon la revendication 1, caractérisé en ce que :

(A) les moyens de détermination de fréquence instantanée et d'énergie instantanée comprennent, dans une première et une deuxième voie en parallèle (110, 210), respectivement un circuit (120) de détermination de fréquence instantanée et un circuit (220) de détermination d'énergie instantanée ;

(B) les moyens de pondération comprennent, en série dans ladite première voie (110), un multiplicateur (130), dont la première entrée est reliée à la sortie du circuit (120) de détermination de fréquence instantanée, et un premier filtre passe-bas (140) dont la sortie est reliée à la première entrée d'un diviseur (90) et, dans ladite deuxième voie (210), un deuxième filtre passe-bas (240) identique au premier et dont l'entrée est reliée d'une part à la sortie du circuit (220) de détermination d'énergie instantanée et d'autre part à la deuxième entrée du multiplicateur (130) et dont la sortie est reliée à la deuxième entrée du diviseur (90) ;

(C) les moyens de correction de diffraction comprennent un convertisseur analogique-numérique (81) à m sorties numériques dont l'entrée est reliée à la sortie du diviseur (90), un compteur (83) à n sorties numériques commandé par un circuit d'horloge (84), une mémoire numérique (82) de stockage de m × n valeurs de correction dont la lecture est contrôlée par le convertisseur A/N (81) et par le compteur (83) et, en sortie de cette mémoire, un convertisseur numérique-analogique (85) dont la sortie délivre les signaux corrigés des effets de diffraction et destinés au circuit (60) d'exploitation des résultats de l'examen échographique.

3. Appareil selon la revendication 2, caractérisé en ce que les moyens de correction de diffraction comprennent également un circuit d'addition algébrique inséré entre la mémoire (82) et le convertisseur numérique-analogique (85) et relié également à la sortie du convertisseur analogique-numérique (81) pour ajouter à la valeur de fréquence à corriger présente sur cette sortie la valeur de correction stockée en mémoire sous forme d'écart algébrique.

4. Appareil selon la revendication 2, caractérisé en ce que les moyens de correction de diffraction comprennent également un circuit de multiplication inséré entre la mémoire (82) et le convertisseur numérique-analogique (85) et relié également à la sortie du convertisseur analogique-numérique (81) pour multiplier la valeur de fréquence à corriger présente sur cette sortie par la valeur de correction stockée en mémoire sous forme de coefficient.

5. Appareil selon la revendication 1, caractérisé en ce que les moyens de détermination comprennent, en sortie du circuit de compensation de gain, un convertisseur analogique-numérique (471), un circuit numérique (472) de calcul de la fréquence instantanée et de l'énergie instantanée dont les sorties sont disponibles sur deux voies (473, 483) en parallèle faisant partie des moyens de pondération et comprenant la première successivement un premier multiplicateur (475) à commande numérique et un additionneur (476) et la deuxième une mémoire (484) délivrant un coefficient numérique a envoyé vers le premier multiplicateur (475) et le coefficient complémentaire b = 1-a envoyé en tant que deuxième entrée vers un deuxième multiplicateur (485) à commande numérique dont la première entrée reçoit la sortie de l'additionneur (476) par l'intermédiaire d'un circuit à retard (486), cette sortie de l'additionneur (476) étant également envoyée vers l'entrée des moyens de correction de diffraction.

6. Appareil selon la revendication 1, caractérisé en ce que les moyens de détermination comprennent, en sortie du circuit (50) de comparaison de gain, un convertisseur analogique-numérique (571), un circuit numérique (572) de calcul de la fréquence instantanée et de l'énergie instantanée dont les sorties sont disponibles sur deux voies (573, 583) en parallèle faisant partie des moyens de pondération et comprenant la première successivement un soustracteur (574), un multiplicateur (575), un additionneur (576) et un circuit à retard (577) dont la sortie est renvoyée en tant que deuxième entrée vers le soustracteur et vers l'additionneur, et la seconde une mémoire (584) délivrant un coefficient numérique a envoyé vers la deuxième entrée du multiplicateur, la sortie du circuit à retard (577) étant également envoyée vers l'entrée des moyens de correction de diffraction.

## Claims

1. An apparatus for the scanning of media by ultrasonic echography, comprising at least one ultrasonic transducer (10) which is connected to a stage (20) for the transmission of electric signals which are converted into acoustic waves by the transducer, and also to a stage (30) for the reception and processing of ultrasonic echoes which occur after reflection of said waves from the obstacles encountered in their propagation direction, said receiver and processing stage itself comprising an amplifier (40), a circuit (50) for the correction of the gain as a function of time, and a circuit (60) for the processing of the results of the echographic examination, characterized in that the receiver and processing stage (30) also comprises, connected to the output of the assembly formed by the amplifier (40) and the gain correction circuit (50), means (120, 220 ; 472 ; 572) for determining the instantaneous frequency and the instantaneous energy of the echographic signal supplied by the gain correction circuit, means (90, 130, 140, 240 ; 475, 476, 484-486 ; 574-577, 584) for weighting the value of the instantaneous frequency by a coefficient which is a function of the instantaneous energy, and means (80) for diffraction correction, which serve to compensate for the diffraction effect which is due to the finite dimension of the transducer (10), the output of the diffraction correction means being connected to said processing circuit.

2. An apparatus as claimed in Claim 1, characterized in that :

(A) the means for determining the instantaneous frequency and the instantaneous energy comprise, in a first and a second parallel channel (110, 210), respectively, a circuit (120) for determining the instantaneous frequency and a circuit (220) for determining the instantaneous energy ;

(B) the weighting means comprise, connected in series in said first channel (110), a multiplier (130) whose first input is connected to the output of the circuit (120) for determining the instantaneous frequency and a first low-pass filter (140) whose output is connected to the first input of a divider (90) and, in said second channel (210), a second low-pass filter (240) which is identical to the first low-pass filter and whose input is connected on the one side to the output of the circuit (220) for determining the instantaneous energy and on the other side to the second input of the multiplier (130) and whose output is connected to the second input of the divider (90) ;

(C) the diffraction correction means comprise an analog-to-digital converter (81) which comprise m digital outputs and whose input is connected to the output of the divider (90), a counter (83) which is controlled by a clock circuit (84) and which comprise n digital outputs, a digital memory (82) for the storage of m × n correction values which are read under the control of the A/D converter (81) and the counter (83), and an analog-to-digital converter (85) which is connected to the output of said memory and whose output supplies the signals corrected for the diffraction effects, said signals being intended for the circuit (60) for the processing of the results of the echographic examination.

3. An apparatus as claimed in Claim 2, characterized in that the diffraction correction means also comprise an algebraic adder circuit which is inserted between the memory (82) and the digital-to-analog converter (85) and which is also connected to the output of the analog-to-digital converter (81) in order to add the correction value stored in the memory in the form of an algebraic difference to the frequency value to be corrected which is present on this output.

4. An apparatus as claimed in Claim 2, characterized in that the diffraction correction means also comprise a multiplier circuit which is inserted between the memory (82) and the digital-to-analog converter (85) and which is also connected to the output of the analog-to-digital converter (81) in order to multiply the frequency value to be corrected which is present on this output of the correction value which is stored in the memory in the form of a coefficient.

5. An apparatus as claimed in Claim 1, characterized in that the determination means comprise, connected to the output of the gain compensation circuit, an analog-to-digital converter (471), a digital circuit (472) for calculating the instantaneous frequency and the instantaneous energy, the output signals thereof being available on two parallel channels (473, 483) which form part of the weighting means, the first channel successively comprising a first digitally controlled multiplier (475) and an adder (476), the second channel comprising a memory (484) for supplying a digital coefficient a which is applied to the first multiplier (475) and the complementary coefficient b = 1-a which is applied as a second input signal to a second digitally controlled multiplier (485) whose first input receives, via a delay circuit (486), the output signal of the adder (476) which is also applied to the input of the diffraction correction means.

6. An apparatus as claimed in Claim 1, characterized in that the determination means comprise, connected to the output of the gain compensation circuit (50), an analog-to-digital converter (571), a digital circuit (572) for calculating the instantaneous frequency and the instantaneous energy whose output signals are available on two parallel channels (573, 583) which from part of the weighting means, the first channel successively comprising a substractor (574), a multiplier (575), an adder (576) and a delay circuit (577), the output signal of which is applied as a second input signal to the substractor and to the adder, the second channel comprising a memory (584) which supplies a digital coefficient a which is applied to the second input of the multiplier, the output signal of the delay circuit (577) also being applied to the input of the diffraction correction means.

## Patentansprüche

1. Gerät zur Untersuchung von Medien mittels Ultraschall-Echographie, mit wenigstens einem Ultraschall-Meßwertumsetzer (10), der einer Aussendestufe (20) für die vom Umsetzer in akustische Wellen umgesetzten elektrischen Signale und einer Empfangs- und Verarbeitungsstufe (30) für Ultraschall-Echos zugeordnet ist, die durch die Reflexion dieser Wellen an den in ihrer Fortpflanzungsrichtung befindlichen Hindernissen ausgelöst werden, wobei diese Empfangs- und Verarbeitungsstufe selbst im

# EP 0 146 182 B1

wesentlichen einen Verstärker (40), eine zeitlich bedingte Verstärkungskorrekturschaltung (50) und eine Schaltung (60) zur Verwentung der Ergebnisse der echographischen Untersuchung enthält, dadurch gekennzeichnet, daß die Empfangs- und Verarbeitungsstufe (30) ebenfalls am Ausgang der vom Verstärker (40) und von der Verstärkungskorrekturschaltung (50) gebildeten Einheit Mittel (120, 220 ; 472 ; 572) zum Bestimmen der momentanen Frequenz und der momentanen Energie des von der Verstärkungskorrekturschaltung gelieferten echographischen Signals, Mittel (90, 130, 140, 240 ; 475, 476, 484-486 ; 574-577, 584) zum Gewichten der Wert der momentanen Frequenz mittels eines vom momentanen Energie abhängigen Koeffizienten und Brechnungskorrekturmittel (80) zum Gewährleisten des Ausgleichs des Brechungseinflusses enthält, der infolge der endlichen Abmessungen des Umsetzers (10) entsteht, wobei der Ausgang der Brechungskorrekturmittel mit der genannten Verwertungsschaltung verbunden ist.

2. Gerät nach Anspruch 1, dadurch gekennzeichnet, daß :

(A) die Momentanfrequenz- und Momentanenergiebestimmungsmittel in einem ersten und einem zweiten Parallelkanal (110, 210) je eine Momentanfrequenzbestimmungsschaltung (120) und eine Momentanenergiebestimmungsschaltung (220) enthalten,

(B) die Gewichtungsmittel in Reihenschaltung im ersten Kanal (110) einen Multiplizierer (130), dessen erster Eingang an den Ausgang der Monmentanfrequenzbestimmungsschaltung (120) angeschlossen ist, und ein erstes Tiefpaßfilter (140), dessen Ausgang an den ersten Eingang eines Teilers (90) angeschlossen ist, und im zweiten Kanal (210) ein zweites, dem ersten gleich eingerichtetes Tiefpaßfilter (240) enthalten, dessen Eingang einerseits mit dem Ausgang der Momentanenergiebestimmungsschaltu ng (220) und andererseits mit dem zweiten Eingang des Multiplizierers (130) verbunden und dessen Ausgang an den zweiten Eingang des Teilers (90) angeschlossen ist,

(C) die Brechungskorrekturmittel einen Analog/Digital-Wandler (81) mit m Digitalausgängen, deren Eingang mit dem Ausgang des Teilers (90) verbunden ist, einen Zähler (83) mit n, von einer Taktschaltung (84) gesteuerten Digitalausgängen, einen Digitalspeicher (82) zum Einschreiben von m × n Korrekturwerten, deren Auslesevorgang vom A/D-Wandler (81) und vom Zähler (83) gesteuert wird, und am Ausgang dieses Speichers einen Digital/Analog-Wandler (85) enthalten, dessen Ausgang die auf Brechungseinfluß korrigierten Signale zur Verwertungsschaltung (60) der Ergebnisse der echographischen Untersuchung liefert.

3. Gerät nach Anspruch 2, dadurch gekennzeichnet, daß die Brechungskorrekturmittel ebenfalls eine zwischen dem Speicher (82) und dem Digital/Analog-Wandler (85) angeordnete algebraische Addierschaltung enthalten, die ebenfalls mit dem Ausgang des Analog/Digital-Wandlers (81) zum Ergänzen des an diesem Ausgang vorhandenen, zu korrigierenden Frequenzwertes mit dem in den Speicher in Form einer algebraischen Abweichung eingeschriebenen Korrekturwert verbunden ist.

4. Gerät nach Anspruch 2, dadurch gekennzeichnet, daß die Brechungskorrekturmittel ebenfalls eine zwischen dem Speicher (82) und dem Digital/Analog-Wandler (85) angeordnete Multiplikationsschaltung enthalten, die ebenfalls mit dem Ausgang des Analog/Digital-Wandlers (81) zum Multiplizieren des an diesem Ausgang vorhandenen, zu korrigierenden Frequenzwertes mit dem in den Speicher in Form eines Koeffizienten eingeschriebenen Korrekturwert verbunden ist.

5. Gerät nach Anspruch 1, dadurch gekennzeichnet, daß die Bestimmungsmittel am Ausgang der Verstärkungsausgleichsschaltung einen Analog/Digital-Wandler (471), eine Digitalschaltung (472) zum Berechnen der Momentanfrequenz und der Momentanenergie entahlten, deren Ausgangssignale auf zwei Kanälen (473, 483) parallel zur Verfügung stehen, die Teile der Gewichtungsmittel sind und wobei der erste nacheinander einen ersten Multiplizierer (475) mit Digitalsteuerung und einen Addierer (476) und der zweite einen Speicher (484) enthält, der einen Digitalkoeffizienten a an den ersten Multiplizierer (475) und den Komplementärkoeffizienten b = 1-a als zweites Eingangssignal an einen zweiten Multiplizierer (485) mit Digitalsteuerung liefert, dessen erster Eingang das Ausgangssignal des Addierer (476) mittels einer Verzögerungsschaltung (486) empfängt, wobei dieses Ausgangssignal des Addierers (476) ebenfalls an den Eingang der Brechungskorrekturmittel gelegt wird.

6. Gerät nach Anspruch 1, dadurch gekennzeichnet, daß die Bestimmungsmittel am Ausgang der Verstärkungsausgleichsschaltung (50) einen Analog/Digital-Wandler (571), eine Digitalschaltung (572) zum Berechnen der Momentanfrequenz und der Monmentanenergie enthalten, deren Ausgangssignale auf zwei Kanälen (573, 583) parallel zur Verfügung stehen, die Teile der Gewichtungsmittel sind und wobei der erste nacheinander einen ersten Subtrahierer (574), einen Multiplizierer (575), einen Addierer (576) und eine Verzögerungsschaltung (577) enthält, deren Ausgangssignal als zweites Eingangssignal an den Subtrahierer und an den Addierer gelegt wird, und der zweite einen Speicher (584) enthält, der einen Digitalkoeffizienten a an den zweiten Eingang des Multiplizierers liefert, wobei dieses Ausgangssignal der Verzögerungsschaltung (577) ebenfalls an den Eingang der Brechungskorrekturmittel gelegt wird.

7

FIG.1a

FIG.1b

FIG.1c

FIG.4

FIG.2

FIG.3